# DEMANDE DE BREVET EUROPEEN

(11) **EP 0 862 961 A1**
(43) Date de publication de la demande: **09.09.1998**
(21) Numéro de dépôt: 98400452.3
(22) Date de dépôt: 26.02.1998
(51) Int. Cl.: B23C 3/32

(54) **Procédé de réalisation d'un dispositif monobloc de retournement de produits d'une ligne de conditionnement et dispositif obtenu par le procédé**

(30) Priorité: 04.03.1997 FR 9702529
(71) Demandeur: Faber, 08140 Bazeilles (FR)
(72) Inventeur: Baijot, Serge, 08200 Wadelincourt (FR)
(74) Mandataire: Debay, Yves

(57) **Abrégé**

La présente invention conceme un procédé de réalisation d'un dispositif (1) de retoumement de produits intégré dans une ligne d'embouteillage ou de conditionnement caractérisé en ce qu'il comporte
- une étape de serrage des deux extrémités d'une barre (1b) monobloc à usiner dans des moyens (2A, 2B, 3A, 3B) de maintien,
- une étape de réalisation d'au moins un orifice (4A, 4B) transversal à la barre (1), situé à proximité d'une de ses deux extrémités et prévu pour le passage en entrée et/ou en sortie de l'outil (6) des moyens (5,6) mobiles de fraisage,
- une étape d'évidement de l'intérieur de la barre (1b) par les moyens (5, 6) de fraisage en formant, sur toute la longueur de la barre (1b), un chemin (7) de guidage et de retoumement formé d'au moins une surface continue pour définir un évidement dont le profil ou la section transversale est adaptée à une forme de produit déterminée, le chemin (7) étant débouchant sur la surface périphérique de la barre de manière à former une fente sensiblement hélicoïdale sur au moins une portion de la longueur de la barre (1b).

## Description

La présente invention concerne un procédé de réalisation d'un dispositif monobloc de retournement de produits d'une ligne de conditionnement et un dispositif obtenu par le procédé.

L'invention concerne plus particulièrement un procédé de réalisation d'un dispositif de renversement de produits, de type bouteilles et flacons par exemple, intégré aux lignes d'embouteillage ou de conditionnement. Les produits conditionnés ou embouteillés peuvent nécessiter un pivotement dans un plan perpendiculaire à l'axe de déroulement du convoyage de ces derniers. Une telle rotation peut être nécessaire, par exemple, pour, un contrôle gravitaire d'absence de corps étrangers dans les produits, un marquage sur le dessous du produit, un rinçage, un lavage par projection par le bas, ect...

Il est connu par le document EP 0.070.195 un dispositif de retournement d'objets autour d'un axe transversal au trajet de l'objet. Les objets sont retournés par guidage selon un trajet hélicoïdal. Le dispositif de retournement enseigné par ce document est constitué d'une multitude de plaques contiguës et pourvues chacune d'une ouverture correspondant au contour de l'objet, les ouvertures étant décalées les unes par rapport aux autres selon des incréments. Les plaques de faible épaisseur par rapport à l'objet sont agencées de manière à former une surface interne discontinue en escalier pour faire pivoter l'objet sur lui-même au cours de son trajet d'avancement.

Cependant, compte-tenu de sa structure, ce type de dispositif de retournement a pour principal inconvénient son coût élevé. En outre, des particules ou saletés peuvent se loger entre deux plaques adjacentes ce qui provoque l'encrassement du dispositif. Pour résoudre ce problème on réalise des dispositifs constitués de deux séries de demi-plaques décalées, les deux séries de demi-plaques étant articulées de façon à pouvoir ouvrir le dispositif pour le nettoyer, sans pour autant que ceci permette d'obtenir des conditions idéales de propreté. Ceci augmente la complexité du dispositif et donc son coût.

Il est également connu par le document WO 96/17778 un dispositif de retournement d'objets formé de tresses de fils métalliques torsadés formant une cage linéaire qui guide le produit en le forçant à pivoter. Le dispositif de retournement enseigné par ce document présente les inconvénients d'être complexe, coûteux et d'une grande fragilité. Par ailleurs, la structure fermée de la cage de fils s'use rapidement et en outre peut être déformée ou également être sujette à des encrassements.

Un but de l'invention est de proposer un procédé de réalisation d'un dispositif de retournement de produits intégré dans une ligne d'embouteillage ou de conditionnement, simple, peu coûteux et palliant les inconvénients de l'art antérieur.

Ce but est atteint par le fait que le procédé de réalisation d'un dispositif de retournement de produits intégré dans une ligne d'embouteillage ou de conditionnement comporte
- une étape de serrage des deux extrémités d'une barre monobloc à usiner dans des moyens de maintien,
- une étape de réalisation d'au moins un orifice transversal à la barre, situé à proximité d'une de ses deux extrémités et prévu pour le passage en entrée et/ou en sortie de l'outil des moyens mobiles de fraisage,
- une étape d'évidement de l'intérieur de la barre par les moyens de fraisage en formant, sur toute la longueur de la barre, un chemin de guidage et de retournement formé d'au moins une surface continue pour définir un évidement dont le profil ou la section transversale est adaptée à une forme de produit déterminée, le chemin débouchant sur la surface périphérique de la barre de manière à former une fente sensiblement hélicoïdale sur au moins une portion de la longueur de la barre.

Selon une autre particularité, les moyens de maintien de la barre sont rotatifs et commandés en rotation de manière à entraîner la barre en rotation autour de son axe de symétrie longitudinal lors de l'usinage des portions hélicoïdales du chemin.

Selon une autre particularités, les moyens mobiles de fraisage sont mobiles longitudinalement, transversalement et en profondeur par rapport à la barre usinée et commandés en fonction du profil usiné.

Selon une autre particularité, la barre est sensiblement cylindrique et ses extrémités sont parallélépipédiques ou cylindriques pour faciliter leur disposition dans les moyens de maintien, les extrémités parallélépipédiques ou cylindriques étant découpées après usinage du chemin pour ne conserver que la portion sensiblement cylindrique de la barre.

Selon une autre particularité, la barre est constituée de matière plastique.

Un autre but de l'invention est de proposer un dispositif monobloc de retournement de produits intégré dans une ligne d'embouteillage ou de conditionnement obtenu par le procédé.

Ce but est atteint par le fait que dispositif de retournement de produits intégré dans une ligne d'embouteillage ou de conditionnement obtenu par le procédé est caractérisé en ce qu'un chemin de guidage des produits est formé dans un bloc de matière par au moins une surface interne continue qui comporte au moins une portion hélicoïdale assurant le pivotement des produits d'un angle A déterminé quelconque compris entre 0 et 360 degrés ou plus.

Selon une autre particularité, le chemin de guidage des produits comporte au moins une zone rectiligne.

Selon une autre particularité, le manchon monobloc est disposé le long ou à une extrémité d'un convoyeur.

Selon une autre particularité, le dispositif de retournement est disposé sur un convoyeur, le manchon monobloc comportant un usinage en méplat longitudinal sur sa surface dite inférieure destinée à être à proximité du tapis du convoyeur de façon qu'à l'entrée au moins du dispositif, la surface supérieure du convoyeur constitue l'extrémité inférieure du logement formé par le chemin de guidage, le chemin de guidage assurant une translation ascendante des produits après leur entrée dans le manchon et une translation descendante des produits avant leur sortie du manchon, pour permettre l'entrée, respectivement la sortie des produits depuis et respectivement vers le convoyeur, en évitant que les produits ne viennent buter sur le convoyeur pendant leur phase de retournement, les mouvements de translation ascendantes ou descendantes des produits étant ou non couplés aux mouvements de pivotement de ces derniers.

Selon une autre particularité, le chemin de guidage ouvert vers l'exétieur, d'une extrémité à l'autre du manchon monobloc, est constitué d'une surface intérieure hélicoïdale ou droite dont la génératrice suit une direction ascendante par rapport au convoyeur, raccordée à au moins une deuxième surface intérieure dont la génératrice est parallèle ou confondue avec l'axe de symétrie du manchon monobloc de matière, et au moins une troisième surface intérieure hélicoïdale ou droite dont la génératrice suit une direction descendante par rapport au convoyeur.

D'autres particularités et avantages de la présente invention apparaîtront plus clairement à la lecture de la description ci-après faite en référence aux dessins annexés dans lesquels :
- la figure 1 représente une vue en perspective et schématique du mode de réalisation du dispositif de retournement selon l'invention,
- la figure 2A représente une vue en perspective et partielle du dispositif de retournement selon l'invention,
- la figure 2B représente une vue de côté du dispositif de retournement de la figure 2A, disposé dans l'axe d'un convoyeur,
- la figure 2C représente une vue de dessus du dispositif de retournement de la figure 2A, disposé le long d'un convoyeur,
- la figure 3 représente une vue en perspective du dispositif de retournement selon l'invention, dans un second mode de réalisation,
- la figure 4 représente une vue de face du dispositif de la figure 3, illustrant deux positions relatives d'un objet au cours de son trajet dans le dispositif de retournement,
- la figure 5 représente une vue en perspective et de dessous du dispositif de la figure 3,
- la figure 6 représente une vue en coupe longitudinale du dispositif de la figure 3, illustrant notamment les mouvements de translations verticales de l'objet au cours de son trajet dans le dispositif de retournement.

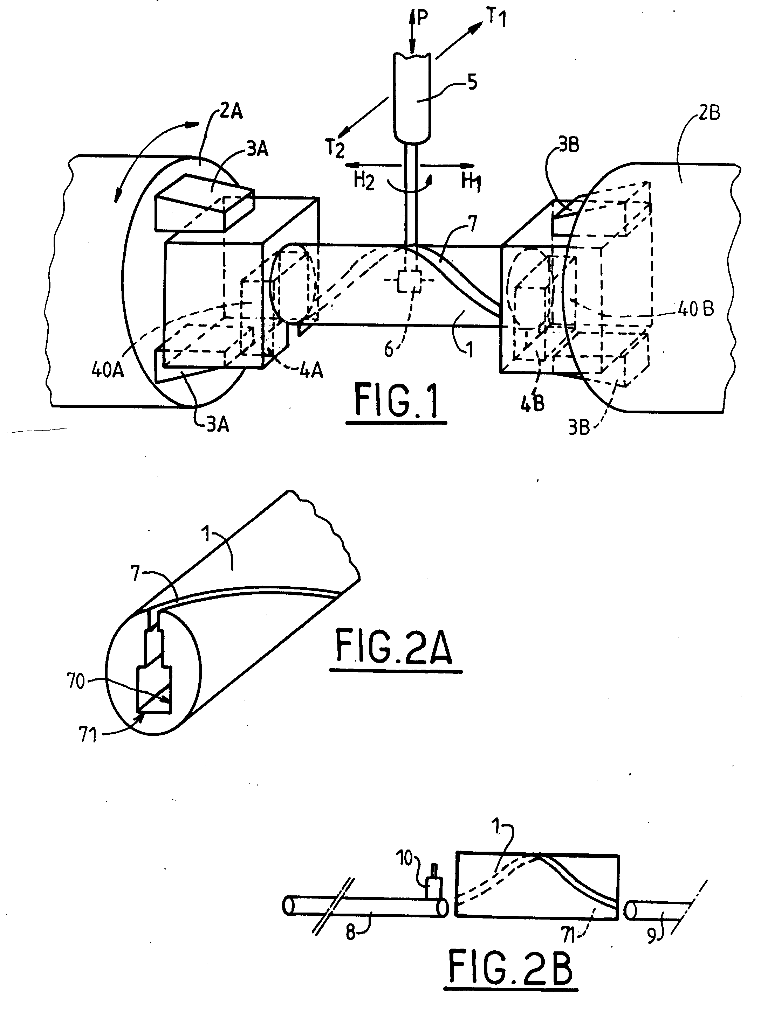

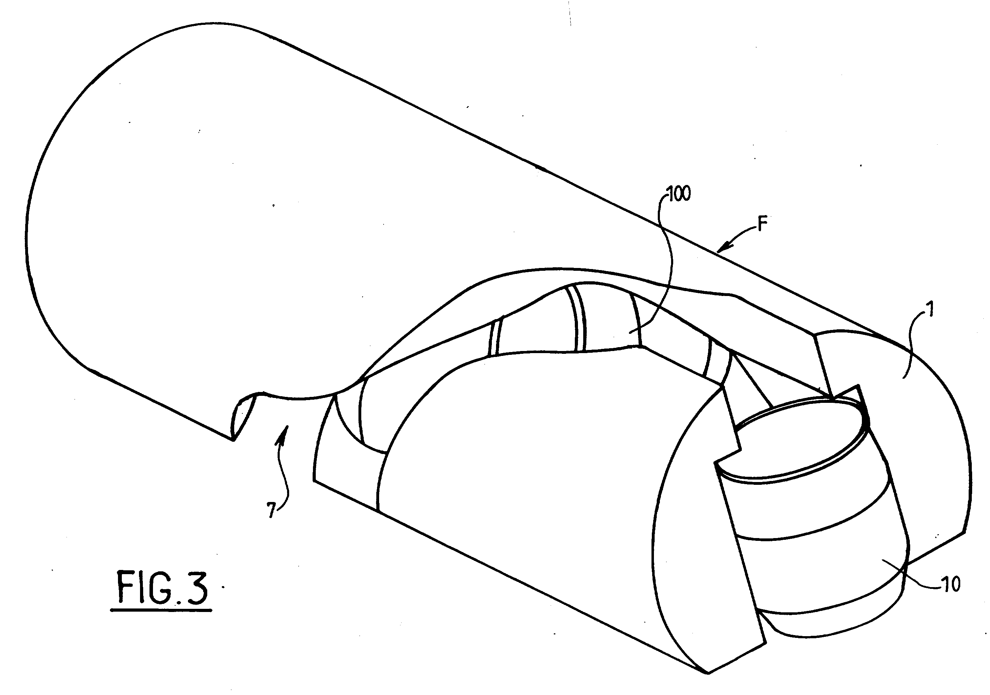

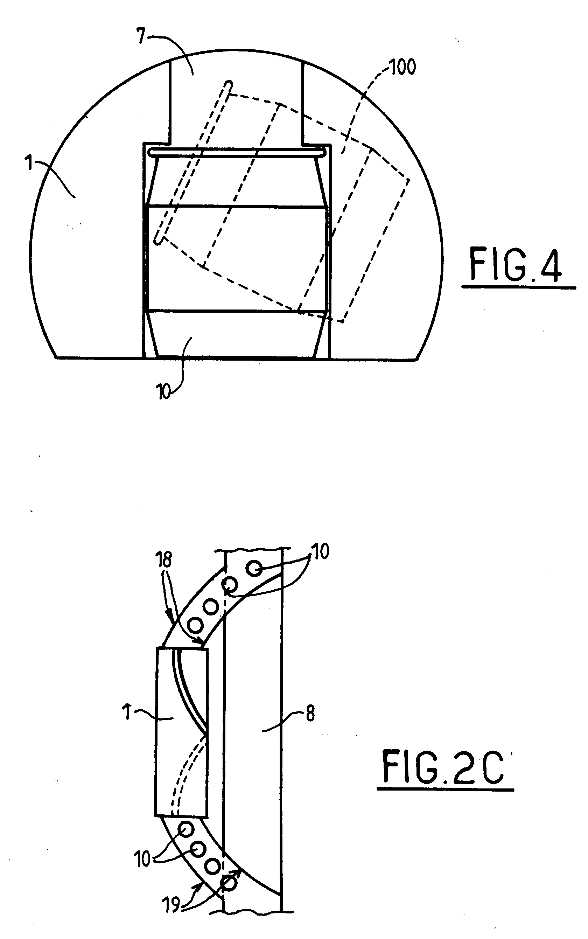

L'invention va à présent être décrite en référence aux figures 1, 2A, 2B et 2C. Le dispositif (1) de retournement de produits de l'invention est destiné à être intégré dans une ligne d'embouteillage ou de conditionnement. Ce dispositif (1) de retournement, est constitué d'un manchon (1) monobloc en matériau usinable dont l'intérieur est évidé de façon à former un chemin (7) de guidage continu des produits. Le chemin (7) de guidage correspond à une surface continue dont une section transverse correspond substantiellement à une projection de l'objet, et dont la surface continue a pour génératrice une ou plusieurs hélices. Le volume creux ainsi défini débouche sur la surface externe par une rainure hélicoïdale. Le dispositif (1) de retournement, destiné à être fixé par exemple le long d'un convoyeur (figure 2C) ou à une extrémité de celui-ci, assure le renversement de produits du type, par exemple, bouteilles et flacons de toutes formes et de tous matériaux. Dans le cas où le dispositif (1) de retournement est disposé le long d'un convoyeur (8, figure 2C), on peut prévoir des moyens (18, 19) de guidages de type connu assurant respectivement l'entrée des produits (10) dans le manchon (1) depuis le convoyeur (8) et la sortie de ces mêmes produits (10) du manchon (1) vers le convoyeur (8). Le dispositif (1) de retournement, qui force les produits à tourner sur eux-mêmes au cours de leur trajet dans le dispositif (1), fonctionne par la seule poussée continue des produits accumulés sur le convoyeur en amont du dispositif (1). Il est également possible de disposer à l'entrée du dispositif (1) un système, par exemple du type à bandes d'entraînement motorisées, fournissant une poussée complémentaire aux produits en entrée du dispositif. Le manchon (1) des figures 2A-2C, du fait de l'épaisseur de matière située en dessous du profil (70), doit avoir sa base (71) disposée au niveau du tapis convoyeur d'entrée (8) et de sortie (9) et les objets peuvent faire un demi-tour ou un tour complet sur eux-mêmes.

Nous allons à présent décrire le procédé de réalisation du dispositif (1) de retournement en référence à la figure 1. Le manchon (1) est usiné à partir d'une barre (1) monobloc constituée par exemple de plastique ou de tout autre matériau. De manière préférée non limitative, la barre (1) monobloc est constituée de Nylon ou d'acétal ou de polyéthylène haute densité. La barre (1) monobloc est disposée entre deux poupées (2A, 2B) entraînées en rotation d'une machine outil numérique. Une première (2A) poupée, fixe en translation, assure l'entraînement en rotation et le serrage de la barre (1) et d'une seconde (2B) poupée, montée folle et mobile en translation par rapport à la poupée (2A) fixe, vient serrer la barre (1). Le serrage de la barre (1) entre les poupées (2A, 2B) est réalisé par exemple au moyen d'un système à mors (3A, 3B). La barre (1) est par exemple sensiblement cylindrique dans sa partie centrale et ses deux extrémités peuvent être parallélépipédiques ou cylindriques pour assurer un meilleur maintien dans les mors (3A, 3B) des deux poupées (2A, 2B). Le chemin (7) de guidage est usiné dans la partie cylindrique de la barre (1), les extrémités parallélépipédiques étant découpées après usinage du chemin (7). Les moyens d'usinage du chemin (7) de guidage sont par exemple constitués de moyens (6) mobiles de fraisage de type connu. A cet effet, les extrémités de la barre sont pourvues chacune d'un orifice (4A, 4B) transversal à la barre (1), prévu pour le passage en entrée et/ou en sortie de la tête (6) des moyens mobiles de fraisage. De manière avantageuse, les moyens (5) de fraisage sont mobiles par rapport à la barre pendant que cette dernière est entraînée en rotation autour de son axe de symétrie par le système à poupées (2A, 2B). Les moyens (5) de fraisage sont, par exemple, aussi bien mobiles transversalement par rapport à l'axe longitudinal de symétrie de la barre (1), que mobiles dans un plan parallèle à l'axe de symétrie de la barre (1). L'outil (6) monté sur moyens (5) de fraisage assure l'évidement de l'intérieur de la barre (1) en formant, sur toute la longueur de sa partie cylindrique, un chemin (7) de guidage et de retournement hélicoïdal continu des produits, adapté à une forme de produit déterminée. L'outil (6) est entraîné en rotation selon son axe de symétrie et la tête de fraisage se déplace linéairement de l'évidement (40A) d'une extrémité de la barre à l'évidement (40B) de l'autre extrémité de la barre (1) tandis que les poupées exécutent, par exemple, une rotation de 180 degrés ou 360 degrés. Des passes successives selon H1 ou H2, avec déplacement pas à pas de la tête (5) de fraisage, transversalement selon T1 ou T2, ou en profondeur selon P, à chaque extrémité permettent de définir le profil de l'objet. Le chemin (7) de guidage est débouchant sur la surface périphérique de la barre (1) en formant une fente sensiblement hélicoïdale sur toute la longueur de la barre (1), avec éventuellement des portions droites. L'usinage du chemin (7) de guidage des objets s'effectue pas à pas, par la programmation des moyens de commande numériques de la machine d'usinage. La forme du couloir (7) de guidage, adaptée à un type de produit déterminé, comporte au moins une portion hélicoïdale assurant le pivotement des produits d'un angle A déterminé quelconque compris entre 0 et 360 degrés. Le chemin (7) de guidage des produits peut également comporter des zones rectilignes et hélicoïdales successives.

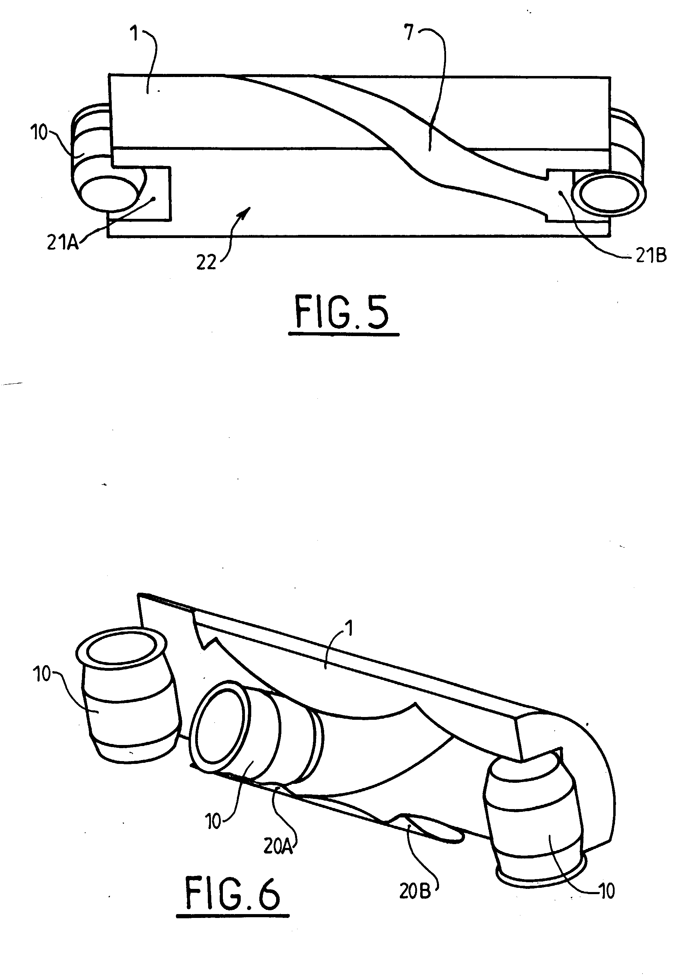

Les figures 3 à 6 représentent une variante de réalisation du dispositif (1) de retournement selon l'invention. Le dispositif (1) de retournement de la variante des figures 3 à 6 est destiné à être disposé, par sa surface (22, figure 5) inférieure plane, directement sur le convoyeur (non représenté) d'une ligne d'embouteillage ou de conditionnement. Les axes de symétrie longitudinaux du dispositif (1) et du convoyeur sont par exemple alignés. La distance séparant le dispositif (1) de retournement de la partie mobile du convoyeur est réduite au minimum. A cet effet, le dispositif (1) monobloc cylindrique comporte sur sa surface inférieure un usinage longitudinal constituant une surface inférieure plane. Cet usinage détermine deux ouvertures (21A, 21B) de formes plus ou moins régulières dans sa surface (22) inférieure, les deux ouvertures (21A, 21B) étant situées respectivement aux deux extrémités du dispositif (1). C'est à dire qu'à l'entrée et à la sortie du dispositif (1), la surface supérieure du convoyeur constitue l'extrémité inférieure du logement formé par le chemin (7) de guidage. Ces deux ouvertures (21A, 21B) permettent aux produits (10) de reposer sur le convoyeur lors de leur entrée ou sortie du dispositif (1). Le chemin (7) de guidage doit assurer dans le cas de cette variante, par une rampe, une translation ascendante des produits (10) après leur entrée dans le dispositif (1) pour éviter que l'angle de la base des produits (10) ne vienne buter sur le convoyeur pendant leur retournement. De même, le dispositif (1) peut assurer, par une seconde rampe, une translation descendante des produits avant leur sortie du dispositif (1), pour remettre ces derniers au niveau du convoyeur. Les mouvements de translation ascendante ou descendante des produits (10) dans le manchon (1) peuvent être couplés ou non aux mouvements de pivotement hélicoïdaux de ces derniers. Par exemple, le chemin (7) de guidage du dispositif (1) de retournement peut comporter, à l'entrée du dispositif (1), une première portion rectiligne provoquant l'ascension des produits, puis une seconde portion hélicoïdale assurant leur pivotement et enfin, avant leur sortie, une troisième portion rectiligne descendante. Dans une autre variante, le chemin (7) de guidage peut également décrire une hélice dont l'axe de symétrie décrit une courbe ascendante puis descendante par rapport au convoyeur, c'est à dire que les mouvements de rotation et de translations verticales sont simultanés. Dans ce dernier cas, la forme et le pas de l'hélice sont déterminés de façon que, lors de leurs mouvements simultanés de rotation et de translation verticale, les produits (10) n'entrent pas en contact avec le convoyeur. La figure 4 représente une vue de face d'une extrémité du dispositif (1) de la figure 3, dans laquelle un produit (10) s'engage. La figure 4 représente également en pointillés la position d'un objet (100) situé environ au niveau du repère F de la figure 3. L'objet (100) en pointillé a été translaté verticalement par rapport au convoyeur et a amorcé son mouvement de rotation. En effet, la partie la plus basse de l'objet (100) en pointillés est surélevée par rapport à la face inférieure du manchon (1) montée à faible distance du convoyeur. Comme développé précédemment, le mouvement d'ascension des produits (10) est nécessaire du fait que, lors du pivotement des objets (10), les diagonales des sections verticales de ces derniers décrivent un cercle de plus grand diamètre que le cercle décrit par l'axe de symétrie vertical de l'objet (10).

La figure 6 représente une vue en coupe longitudinale et schématique du dispositif de la figure 3, symbolisant les mouvements de translations verticales de l'objet (10) au cours de son trajet dans le dispositif (1) de retournement. A proximité des entrée et sortie du manchon (1) de retournement, le couloir (7) de guidage est respectivement ascendant et descendant. Les portions (20A, 20B) du manchon (1) qui forment les rampes respectivement ascendantes et descendantes du couloir (7), constituent des liens entre les deux moitiés du manchon (1) délimitées par la rainure (7) hélicoïdale qui fait le tour du manchon (1) sur toute sa longueur. Ce type de manchon (1) peut être installé directement au-dessus d'un convoyeur, sans que cela soit à son extrémité, mais à une faible distance qui ne gène pas le déplacement du tapis mais permette l'attaque de la rampe par les objets. La rainure (7) d'usinage permet d'inclure, après le retournement, une portion rectiligne permettant une opération par exemple de nettoyage dans la zone où la rainure est en position inférieure, en vis-à-vis du tapis et par exemple rectiligne, si cela est nécessaire pour obtenir durée de nettoyage suffisante. Avantageusement, la portion rectiligne peut être décalée angulairement par rapport à la verticale dans un plan perpendiculaire à l'axe d'avancement des produits de façon que la portion rectiligne de la rainure (7) soit dégagée par rapport au tapis du convoyeur. Ceci permet l'accès aux produits pour leur faire subir opération de nettoyage par exemple. Pour usiner un tel manchon (1), il suffit d'interrompre la rotation des poupées lorsque la barre a effectué un demi-tour et déplacer la fraise (6) selon H1 de la longueur voulue pour la partie rectiligne. Le manchon (1) de la variante des figures 3 à 6 est donc également monobloc.

On conçoit aisément que l'on a ainsi, un dispositif de retournement d'objets, monobloc, simple de fabrication, peu coûteux et adaptable à une majorité de formes d'objets.

D'autres modifications à la portée de l'homme de métier font également partie de l'esprit de l'invention.

## Revendications

1. Procédé de réalisation d'un dispositif (1) de retournement de produits intégré dans une ligne d'embouteillage ou de conditionnement caractérisé en ce qu'il comporte
- une étape de serrage des deux extrémités d'une barre (1b) monobloc à usiner dans des moyens (2A, 2B, 3A, 3B) de maintien,
- une étape de réalisation d'au moins un orifice (4A, 4B) transversal à la barre (1), situé à proximité d'une de ses deux extrémités et prévu pour le passage en entrée et/ou en sortie de l'outil (6) des moyens (5,6) mobiles de fraisage,
- une étape d'évidement de l'intérieur de la barre (1b) par les moyens (5, 6) de fraisage en formant, sur toute la longueur de la barre (1b), un chemin (7) de guidage et de retournement formé d'au moins une surface continue pour définir un évidement dont le profil ou la section transversale est adaptée à une forme de produit déterminée, le chemin (7) débouchant sur la surface périphérique de la barre de manière à former une fente sensiblement hélicoïdale sur au moins une portion de la longueur de la barre (1b).

2. Procédé selon la revendication 1 caractérisé en ce que les moyens (2A, 2B, 3A,3B) de maintien de la barre (1b) sont rotatifs et commandés en rotation de manière à entraîner la barre (1b) en rotation autour de son axe de symétrie longitudinal lors de l'usinage des portions hélicoïdales du chemin (7).

3. Procédé selon la revendication 1 ou 2 caractérisé en ce que les moyens (5) mobiles de fraisage sont mobiles longitudinalement, transversalement et en profondeur par rapport à la barre (1b) usinée et commandés en fonction du profil usiné.

4. Procédé selon l'une quelconque des revendications 1 à 3 caractérisé en ce que la barre (1b) est sensiblement cylindrique et ses extrémités sont parallélépipédiques ou cylindriques pour faciliter leur disposition dans les moyens de maintien (2A, 2B, 3A, 3B), les extrémités parallélépipédiques ou cylindriques étant découpées après usinage du chemin (7) pour ne conserver que la portion sensiblement cylindrique de la barre (1b).

5. Procédé selon l'une quelconque des revendications 1 à 4 caractérisé en ce que la barre (1b) est constituée de matière plastique.

6. Dispositif (1) de retournement de produits intégré dans une ligne d'embouteillage ou de conditionnement obtenu par le procédé selon l'une quelconque des revendications précédentes, caractérisé en ce qu'un chemin (7) de guidage des produits est formé dans un bloc de matière par au moins une surface interne continue qui comporte au moins une portion hélicoïdale assurant le pivotement des produits (10) d'un angle A déterminé quelconque compris entre 0 et 360 degrés ou plus.

7. Dispositif (1) de retournement de produits intégré dans une ligne d'embouteillage ou de conditionnement selon la revendication 6, caractérisé en ce que le chemin (7) de guidage des produits comporte au moins une zone rectiligne.

8. Dispositif (1) monobloc de retournement de produits intégré dans une ligne d'embouteillage ou de conditionnement selon la revendication 6 ou 7, caractérisé en ce que le manchon (la) monobloc est disposé le long ou à une extrémité d'un convoyeur.

9. Dispositif (1) de retournement de produits intégré dans une ligne d'embouteillage ou de conditionnement selon la revendication 6 ou 7 caractérisé en ce qu'il est disposé sur un convoyeur, le manchon (1a) monobloc comportant un usinage en méplat longitudinal sur sa surface dite inférieure destinée à être à proximité du tapis du convoyeur de façon qu'à l'entrée au moins du dispositif (1), la surface supérieure du convoyeur constitue l'extrémité inférieure du logement formé par le chemin (7) de guidage, le chemin (7) de guidage assurant une translation ascendante des produits après leur entrée dans le manchon (la) et une translation descendante des produits avant leur sortie du manchon (1a), pour permettre l'entrée, respectivement la sortie des produits (10) depuis et respectivement vers le convoyeur, en évitant que les produits (10) ne viennent buter sur le convoyeur pendant leur phase de retournement, les mouvements de translation ascendantes ou descendantes des produits (10) étant ou non couplés aux mouvements de pivotement de ces derniers.

10. Dispositif monobloc de retournement de produit intégré dans une ligne d'embouteillage ou de conditionnement selon la revendication 9, caractérisée en ce que le chemin (7) de guidage ouvert vers l'exétieur, d'une extrémité à l'autre du manchon (la) monobloc, est constitué d'une surface intérieure hélicoïdale ou droite dont la génératrice suit une direction ascendante par rapport au convoyeur, raccordée à au moins une deuxième surface intérieure dont la génératrice est parallèle ou confondue avec l'axe de symétrie du manchon (1) monobloc de matière, et au moins une troisième surface intérieure hélicoïdale ou droite dont la génératrice suit une direction descendante par rapport au convoyeur.
